(19) Europäisches Patentamt
European Patent Office
Office européen des brevets

(11) **EP 4 212 022 A1**

(12) **EUROPEAN PATENT APPLICATION**

(43) Date of publication:
**19.07.2023 Bulletin 2023/29**

(21) Application number: **23151314.4**

(22) Date of filing: **12.01.2023**

(51) International Patent Classification (IPC):
*A23J 3/14* (2006.01)    *A23J 3/16* (2006.01)
*A23L 2/38* (2021.01)    *A23L 2/66* (2006.01)
*A23L 11/60* (2021.01)    *A23L 11/65* (2021.01)
*A23L 29/00* (2016.01)    *A23L 29/206* (2016.01)
*A23L 29/262* (2016.01)    *A23L 33/185* (2016.01)

(52) Cooperative Patent Classification (CPC):
**A23L 2/382; A23J 3/14; A23J 3/16; A23L 2/66;
A23L 11/60; A23L 11/65; A23L 29/015;
A23L 29/206; A23L 29/262; A23L 33/185**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2022 JP 2022005875**

(71) Applicant: **Fuji Oil Holdings Inc.
Izumisano-shi, Osaka 598-8540 (JP)**

(72) Inventors:
• **FUJII, Nanae
Izumisano-shi, 598-8540 (JP)**
• **OKAMOTO, Himeka
Izumisano-shi, 598-8540 (JP)**
• **SHIMA, Yuugo
Tsukubamirai-shi, 300-2497 (JP)**

(74) Representative: **Dennemeyer & Associates S.A.
Postfach 70 04 25
81304 München (DE)**

(54) **ACIDIC VEGETABLE PROTEIN BEVERAGE**

(57) There is provided an acidic vegetable protein beverage including a legumes-derived water-soluble polysaccharide, a divalent cation, and a vegetable protein.

**EP 4 212 022 A1**

**Description**

BACKGROUND

1. Technical Field

The present disclosure relates to an acidic vegetable protein beverage.

2. Related Art

In recent years, it has been considered problematic, from the viewpoint of environmental protection and global warming, that the emission of greenhouse effect gas and the excess use of resources attributable to animal husbandry impose environmental burdens in the production of cow milk. Under such circumstances, vegetable milk derived from vegetable raw materials, such as soy milk and almond milk, attract attention as an alternative to cow milk. The usage of lands and resources necessary for the production of vegetable milk is extraordinarily smaller than that for cow milk. It is believed that this reduces environment burdens.

Vegetable milk not only reduces environmental burdens but also has characteristics different from those of cow milk in terms of nutrition and flavor. Thus, vegetable milk appears to be also widespread in the market. Actually, many vegetable milks have characteristic flavor depending on raw materials. For improving flavor and varying taste, various flavorings are devised. Especially, flavor improvement by the addition of fruit juice or fermentation is a method which has been also widely applied in milk protein-containing beverages. Therefore, it is considered that these methods will also become widespread in the market development of vegetable milk.

As a method for suppressing the aggregation of protein contained in legumes when vegetable milk is used for acidic beverages, technologies disclosed in JP-A-5-308900 and WO 2004-002231 A are known.

In the technology of JP-A-5-308900, calcium is firstly added at the preparation of acidic protein beverages which contain legumes as a raw material. Then, complicated steps, including homogenization after heating and further rehomogenization after acidification, are necessary. Accordingly, separation occurs in the prepared beverages. That is, the stability of the beverages is not sufficient. In the technology of WO 2004-002231 A, whole bean flour is used as a raw material. This method requires a homogenization step to be repeated multiple times and adding calcium or magnesium. In this manner, the steps are complicated.

As described above, a method for preventing sedimentation in acidic beverages by improving steps is recognized for legumes. However, a method for improving stability, which is widely usable for vegetable milk, does not exist.

Not only in vegetable milk but also in acidic protein beverages, pectin, carboxymethyl cellulose, a water-soluble soy polysaccharide, and a water-soluble pea polysaccharide are generally used for preventing the aggregation of protein. For preventing the aggregation, a stabilizer needs to be added more for vegetable protein than for milk protein. Therefore, it is desirable to reduce the amount of a stabilizer added, from the viewpoint of flavor and cost.

SUMMARY

An acidic vegetable protein beverage according to an embodiment of the present disclosure includes a legumes-derived water-soluble polysaccharide, a divalent cation, and a vegetable protein.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

An object of the present disclosure is to suppress aggregation and sedimentation in an acidic vegetable protein beverage with a low concentration of a stabilizer.

For solving the above-described problem, research has been intensively conducted. As a result, it has been found that aggregation and sedimentation of protein can be suppressed at a low stabilizer concentration by adding a legumes-derived water-soluble polysaccharide and a divalent cation to an acidic vegetable protein beverage. This has enabled preparation of a low-viscosity beverage. Based on such knowledge, the acidic vegetable protein beverage according to the present embodiment has been accomplished.

That is, the present disclosure relates to

(1) an acidic vegetable protein beverage including a legumes-derived water-soluble polysaccharide, a divalent cation, and a vegetable protein,

(2) the acidic vegetable protein beverage according to (1), wherein a concentration of the divalent cation added in the acidic vegetable protein beverage is 3 to 20 mM based on weight,

(3) the acidic vegetable protein beverage according to (1) or (2), wherein the legumes-derived water-soluble polysaccharide is a water-soluble pea polysaccharide or a water-soluble soy polysaccharide,

(4) a protein dispersion stabilizer for an acidic vegetable protein beverage, including a legumes-derived water-soluble polysaccharide and a divalent cation,

(5) a production method of an acidic vegetable protein beverage, including adding a legumes-derived water-soluble polysaccharide and a divalent cation,

(6) the production method of an acidic vegetable protein beverage according to (5), including adding the divalent cation such that a concentration of the divalent cation added in the acidic vegetable protein beverage is 3 to 20 mM based on weight,

(7) a method for stabilizing protein dispersion in an acidic vegetable protein beverage, including adding a legumes-derived water-soluble polysaccharide and a divalent cation, and

(8) The method for stabilizing protein dispersion in an acidic vegetable protein beverage according to (7), including adding the divalent cation such that a concentration of the divalent cation added in the acidic vegetable protein beverage is 3 to 20 mM based on weight.

According to the present embodiment, there can be prepared a low-viscosity acidic vegetable protein beverage in which aggregation and sedimentation are suppressed even with a small amount of a stabilizer added.

Hereinafter, the present embodiment will be specifically described.

(Acidic vegetable protein beverage)

Examples of the acidic vegetable protein beverage according to the present embodiment include acidic beverages added with an acidulant, fermented beverages such as a drinking yogurt and a lactic acid bacteria beverage prepared by fermentation, and frozen drinks obtained by freezing the fermented beverages. Here, a starter used in the preparation of the fermented beverages is a beverage modified by a flora usually used for modifying fermented milk, such as a lactic acid bacterium or a yeast and by a flora of a similar type. The pH of the vegetable acidic protein beverage according to the present embodiment is not particularly limited. In general, the vegetable acidic protein beverage refers to a beverage having a pH of 6 or less, preferably 5.5 or less, and further preferably 5 or less, 4.8 or less, 4.6 or less, or 4.5 or less. The lower limit of the pH of the vegetable acidic protein beverage is not particularly limited. The lower limit of the pH of the vegetable acidic protein beverage is preferably 3 or more, more preferably 3.2 or more, and further preferably 3.3 or more or 3.4 or more.

The protein content of the acidic vegetable protein beverage is preferably 0.05 to 5% by weight, more preferably 0.1 to 5% by weight, and further preferably 0.3 to 4% by weight, 0.4 to 3% by weight, or 0.5 to 3% by weight.

(Production method of acidic vegetable protein beverage)

An example of the production method of an acidic vegetable protein beverage according to the present embodiment is the following method. First, a vegetable protein-containing solution, an aqueous solution containing a water-soluble pea polysaccharide or a water-soluble soy polysaccharide, a solution containing a divalent cation, and a solution containing saccharides are prepared. These prepared solutions are mixed. Thereafter, the pH of the obtained mixed liquid is adjusted with an acid such as lactic acid or citric acid. Alternatively, the pH is decreased through a fermentation process. Furthermore, a homogenization step, a heat sterilization step, and a container charging step are performed to produce the acidic vegetable protein beverage.

(Vegetable protein)

Examples of a protein source used as the vegetable protein of the acidic vegetable protein beverage according to the present embodiment include soy milk, pea milk, almond milk, coconut milk, rice milk, oat milk, cashew nut milk, peanut milk, walnut milk, linseed milk, and hemp milk. These protein sources can be directly used. Alternatively, an isolated and concentrated protein such as isolated soy protein may be used. These protein sources can be used as a liquid raw material. Alternatively, a concentrated or spray-dried raw material may be used. From the viewpoint of nutrient ingredients or flavor, two or more of these protein sources can also be used in combination.

(Legumes-derived water-soluble polysaccharide)

The legumes-derived water-soluble polysaccharide used in the present embodiment refers to a water-soluble polysaccharide extracted from seeds of legumes. The legumes are not particularly limited. Examples of the legumes include red bean, mung bean, black-eyed pea, red kidney bean, runner bean, common bean, butter bean, broad bean, pea, chickpea, carob bean, Canavalia gladiata, lupin bean, lentil bean, soybean, and peanuts. The legumes-derived water-soluble polysaccharide used in the present embodiment are particularly preferably a water-soluble pea polysaccharide and a water-soluble soy polysaccharide.

(Water-soluble pea polysaccharide)

The water-soluble pea polysaccharide used in the present embodiment refers to a water-soluble polysaccharide extracted from seeds of peas. This water-soluble polysaccharide is extracted preferably from the grain part of seeds of peas and further preferably from seeds of yellow pea. An example of the production method is a production example described in the Description of PCT/JP2012/065907 of the international application. An example of a commercially available water-soluble pea polysaccharide is a product (trade name: FIPEA-D) of Fuji Oil Co., Ltd.

(Water-soluble soy polysaccharide)

The water-soluble soy polysaccharide used in the present embodiment refers to a water-soluble polysaccharide extracted from seeds of soybean. This water-soluble polysaccharide is extracted preferably from the grain part of seeds of soybean and further preferably from soy pulp which is generated as a byproduct in the production process of tofu or isolated soy protein. Soy pulp obtained from defatted soybean is further suitably used. An example of the production method is separating solid from liquid of an extract from soy pulp as a raw material under the condition of the alkaline region or the weak acidic region and at a temperature exceeding 100°C. An example of a commercially available water-soluble soy polysaccharide is a product (trade name: Soyafibe-S) of Fuji Oil Co., Ltd.

(Divalent cation)

Examples of the divalent cation used in the present embodiment include calcium, magnesium, iron, and zinc. Any inorganic or organic acid salt containing the divalent cation can be used. The inorganic or organic acid salt containing the divalent cation used in the present embodiment is not particularly limited. Examples of the inorganic or organic acid salt include calcium chloride, magnesium chloride, calcium lactate, magnesium lactate, calcium gluconate, calcium ascorbate, calcium citrate, calcium hydroxide, magnesium hydroxide, calcium stearate, magnesium stearate, calcium sorbate, calcium carbonate, magnesium carbonate, calcium acetate, calcium pantothenate, calcium dihydrogen pyrophosphate, calcium sulphate, magnesium sulfate, calcium phosphate, magnesium phosphate, calcium glutamate, magnesium glutamate, magnesium oxide, iron chloride, and zinc sulfate. When used in beverages, a highly soluble salt is preferable. More preferable salts are calcium chloride, magnesium chloride, calcium carbonate, magnesium sulfate, calcium lactate, and magnesium lactate. Further preferable salts are calcium lactate, magnesium lactate, calcium chloride, and magnesium chloride.

(Timing for adding legumes-derived water-soluble polysaccharide)

A timing for adding the legumes-derived water-soluble polysaccharide used in the present embodiment to the acidic vegetable protein beverage will be described. The legumes-derived water-soluble polysaccharide may be directly added and mixed to a raw material containing vegetable protein, sugar, and others. Alternatively, an aqueous solution obtained by dissolving the legumes-derived water-soluble polysaccharide may be added to the raw material. The legumes-derived water-soluble polysaccharide exerts its function no matter in which step it is added. Preferably, the polysaccharide is added before sterilization heating. When a beverage is prepared through a fermentation step, the polysaccharide may be added either before or after fermentation. In either case, the stability of the beverage can be achieved. The legumes-derived water-soluble polysaccharide is soluble in cold water. Therefore, the polysaccharide does not need to be hydrothermally dissolved as in the case of agar. Also, the viscosity of the polysaccharide is lower than that of fruit-derived pectin. Furthermore, a change in physical properties with temperature of the polysaccharide is small. Therefore, the polysaccharide has an advantage in that it is easily used in the production of an acidic vegetable protein beverage.

(Polysaccharide)

In the acidic vegetable protein beverage, another water-soluble polysaccharide can be used in combination, within the range that does not impair the effects of the present embodiment. The another water-soluble polysaccharide is used as a dispersion stabilizer and gelator of protein. Examples of another water-soluble polysaccharide used in the present embodiment include propylene glycol alginate, high-methoxyl pectin, carboxymethyl cellulose (CMC), xanthan gum, locust bean gum, guar gum, gum arabic, agar, carrageenan, and gellan gum.

In the acidic vegetable protein beverage according to the present embodiment, the content of the legumes-derived water-soluble polysaccharide is preferably 0.03 to 4% by weight, more preferably 0.05 to 2% by weight, and further preferably 0.08 to 1% by weight.

When the amount of the added legumes-derived water-soluble polysaccharide is set within the above-described range, there can be obtained an acidic vegetable protein beverage which is stable without aggregation and has good flavor.

The concentration of the divalent cation in the acidic vegetable protein beverage according to the present embodiment, as, for example, the concentration of the cation added to the beverage, is preferably 3 to 20 mM based on weight, more preferably 5 to 20 mM based on weight, and further preferably 5 to 15 mM based on weight.

When the concentration of the divalent cation is within the above-described range, there can be obtained an acidic vegetable protein beverage which is stable without aggregation and has good flavor.

To the acidic vegetable protein beverage according to the present embodiment, fruit juice or vegetable juice for flavoring can be added. The fruit juice and vegetable juice are not particularly limited. Examples of the fruit juice include juice from strawberry, orange, peach, mango, pineapple, banana, passion fruit, apple, grape, pear, watermelon, kiwi fruit, pomegranate, loquat, persimmon, blueberry, raspberry, and cherry. Examples of the vegetable juice include juice from carrot, tomato, spinach, pumpkin, kale, celery, komatsuna (Japanese mustard spinach), bok choy, broccoli, bell pepper, cabbage, lettuce, Chinese cabbage, daikon radish, parsley, onion, and asparagus.

In the acidic vegetable protein beverage according to the present embodiment, any known sweetener can be used. Specifically, the sweetener to be used is at least one selected from table sugar, honey, maple syrup, molasses (syrup), starch syrup, fructose, maltose, oligosaccharide, isomerized sugar, invert sugar, sugar alcohol, table sugar-bound starch syrup (coupling sugar), trehalose, licorice extract, saccharin (sodium saccharin), aspartame, acesulfame potassium, sucralose, stevia extract, and powdered stevia.

Also, minerals such as vitamins, iron, phosphorus, potassium, or sodium may be added as necessary.

EXAMPLES

Examples will be described below. It is noted that % in Examples and Comparative Examples is based on weight, unless otherwise stated.

(Evaluation method of acidic vegetable protein beverage)

For an acidic vegetable protein beverage (sample beverage) which was stored at 10°C for one day after its preparation, the pH, viscosity, and sedimentation rate were evaluated.

Aggregation

The sample beverage was visually observed. When separation into two layers was observed, the sample beverage was evaluated as "separation and aggregation". When separation and aggregation was not observed, the sample beverage was further analyzed as indicated below.

pH

The PH of the sample beverage was measured at 10°C by a pH METER F-71 (manufactured by Horiba, Ltd.).

Viscosity

The viscosity of the sample beverage was measured under the conditions of MI rotor, 60 rpm, 1 minute, and 10°C, using a B type rotary viscometer (manufactured by Toki Sangyo Co., Ltd).

Sedimentation rate

A prescribed amount (sample weight) of the sample beverage was dispensed into a centrifuge tube as a container. The dispensed sample beverage was treated by a centrifuge under the conditions of 700× g and 20 minutes. After the treatment, the supernatant in the container was discarded. Thereafter, the sedimentation rate in the sample beverage was calculated from the weight (sedimentation weight) of the sediment remained in the container, according to the equation below:

$$\text{sedimentation rate } (\%) = (\text{sedimentation weight/sample weight}) \times 100.$$

Flavor

The flavor of the sample beverage was evaluated by five panelists skilled in the flavor evaluation of an acidic vegetable protein beverage. When a flavor peculiar to the added cation was not sensed, the sample beverage was evaluated as "A". When a flavor peculiar to the added cation was sensed, the sample beverage was evaluated as "B".

Overall evaluation

When in the above-described evaluation, separation and aggregation was not visually observed, the sedimentation rate was 3% or less, and a flavor peculiar to the cation was not sensed, the sample beverage was evaluated as "A", indicating a beverage that has an acceptable quality with excellent beverage stability and good flavor. Otherwise, the sample beverage was evaluated as "B".

(Preparation of beverage)

Raw materials used in the preparation of the beverage are as follows.

Water-soluble polysaccharide

A 2% water-soluble pea polysaccharide solution, a 2% water-soluble soy polysaccharide solution, and a 2% HM pectin solution were prepared. These water-soluble polysaccharides were completely dissolved in a hot water bath at 80°C.

Protein

A soy protein isolate (Fujipro F, manufactured by Fuji Oil Co., Ltd., crude protein content per solid content: 93.5%) in an amount of 100 g was added to 900 g of room temperature water. The mixture was stirred at 70°C for 20 minutes so that the soy protein isolate was dissolved in water. After cooling, a 10% soy protein solution was obtained.
A pea protein isolate (Nutralys, manufactured by Roquette Co., crude protein content per solid content: 85.5%) in an amount of 100 g was added to 900 g of room temperature water. The mixture was stirred at 70°C for 20 minutes so that the pea protein isolate was dissolved in water. After cooling, a 10% pea protein solution was obtained.
A dehulled almond milk powder (manufactured by Tsukuba Dairy Products Co., Ltd., crude protein content per solid content: 28%) in an amount of 50 g was added to 950 g of room temperature water. The mixture was stirred at 70°C for 20 minutes so that the dehulled almond milk powder was dissolved in water. After cooling, a 5% almond milk was obtained.
A canned coconut milk (YOUKI Food Co., Ltd., crude protein content per solid content: 1.9%) was diluted by a factor of 5 to obtain a diluted coconut milk.
As a concentrated oat milk (crude protein content per solid content: 6.5%), a product manufactured by GODO Co., Ltd. was used.

Sugar liquor

Granulated sugar in an amount of 500 g was added to 500 g of water at room temperature, and the mixture was stirred and dissolved to obtain a 50% sugar liquor.

Cation salts

A 2% solution of each cation salt was prepared by stirring and dissolution. As calcium lactate, calcium lactate pentahydrate (Kishida Chemical Co., Ltd.) was used.
As raw materials, the above-described water-soluble polysaccharide, protein, sugar liquor, and cation salts were used. These raw materials were mixed at the following formulation ratios of Examples and Comparative Examples. The pH of the raw material liquor obtained by mixing was adjusted with a 50% citric acid solution. Furthermore, the raw material liquor was homogenized by a homogenizer. Thereafter, the raw material liquor was sterilized at 93°C. In this manner, an acidic vegetable protein beverage was prepared.

(Comparison of polysaccharides)

As the polysaccharide, a water-soluble pea polysaccharide (FIPEA-D, manufactured by Fuji Oil Co., Ltd.), a water-soluble soy polysaccharide (Soyafibe-S-DA100, manufactured by Fuji Oil Co., Ltd.), and an HM pectin (Genu pectin type JMJ-J, manufactured by Sansho Co., Ltd.) were used. With these polysaccharides at formulation amounts illustrated in Table 1, acidic soy protein beverages were prepared. The evaluation result is illustrated in Table 2.

(Table 1) Beverage formulation

| Concentration of cation added in beverage (mM) | 0 | 7.8 | 0 | 7.8 | 0 | 7.8 | 0 | 7.8 | 0 | 7.8 | 0 | 7.8 | 0 | 7.8 |
|---|---|---|---|---|---|---|---|---|---|---|---|---|---|---|
| Ratio (%) | Comparative Example1 | Example 1 | Comparative Example2 | Example 2 | Comparative Example3 | Comparative Example4 | Comparative Example5 | Comparative Example6 | Comparative Example7 | Example 3 | Comparative Example8 | Example 4 | Comparative Example9 | Comparative Example10 |
| Soy protein | 1.07 | 1.07 | 1.07 | 1.07 | 1.07 | 1.07 | 1.07 | 1.07 | 1.07 | 1.07 | 1.07 | 1.07 | 1.07 | 1.07 |
| Water-soluble soy polysaccharide | 0.1 | 0.1 | · | · | · | · | · | · | 0.1 | 0.1 | · | · | · | · |
| Water-soluble pea polysaccharide | · | · | 0.2 | 0.2 | · | · | · | · | · | · | 0.2 | 0.2 | · | · |
| MM Pectin | · | · | · | · | 0.2 | 0.2 | · | · | · | · | · | · | 0.2 | 0.2 |
| Granulated sugar | 7 | 7 | 7 | 7 | 7 | 7 | 7 | 7 | 7 | 7 | 7 | 7 | 7 | 7 |
| Calcium lactate | 0 | 0.24 | 0 | 0.24 | 0 | 0.24 | 0 | 0.24 | 0 | 0.24 | 0 | 0.24 | 0 | 0.24 |
| Water | Remainder | Remainder | Remainder | Remainder | Remainder | Remainder | Remainder | Remainder | Remainder | Remainder | Remainder | Remainder | Remainder | Remainder |
| Total | 100 | 100 | 100 | 100 | 100 | 100 | 100 | 100 | 100 | 100 | 100 | 100 | 100 | 100 |
| Beverage pH | 4.0 | 4.0 | 4.0 | 4.0 | 4.0 | 4.0 | 4.0 | 4.0 | 3.8 | 3.8 | 3.8 | 3.8 | 3.8 | 3.8 |

EP 4 212 022 A1

(Table 2) Evaluation result of beverage stability

| | Comparative Example1 | Example 1 | Comparative Example2 | Example 2 | Comparative Example3 | Comparative Example4 | Comparative Example5 | Comparative Example6 | Comparative Example7 | Example 3 | Comparative Example 8 | Example 4 | Comparative Example9 | Comparative Example10 |
|---|---|---|---|---|---|---|---|---|---|---|---|---|---|---|
| Concentration of cation added in beverage (mM) | 0 | 7.8 | 0 | 7.8 | 0 | 7.8 | 0 | 7.8 | 0 | 7.8 | 0 | 7.8 | 0 | 7.8 |
| Aggregation | Separation and aggregation | · | Separation and aggregation | · | Separation and aggregation | Separation and aggregation | Separation and aggregation | · | Separation and aggregation | · | Separation and aggregation | · | Separation and aggregation | Separation and aggregation |
| Viscosity (mPa· s) | | 5.2 | | 5.3 | | | | 9.9 | | 5.1 | | 5.1 | | |
| Sedimentation rate (%) | | 1.9 | | 0.9 | | | | 8.1 | | 1.4 | | 1.8 | | |
| Flavor | | A | | A | | | | A | | A | | A | | |
| Overall evaluation | B | A | B | A | B | B | B | B | B | A | B | A | B | B |

EP 4 212 022 A1

In the beverage containing a water-soluble pea polysaccharide and the beverage containing a water-soluble soy polysaccharide, separation in the acidic beverage was suppressed at either pH by the added calcium. Also, the flavor was good. Furthermore, the sedimentation rate was low. Therefore, these beverages had high stability. On the other hand, the stability of the beverage containing pectin was not improved even with the added calcium.

(Comparison of salts)

With salts at formulation amounts illustrated in Table 3, acidic soy protein beverages were prepared. The evaluation result is illustrated in Table 4.

(Table 3) Beverage formulation

| Concentration of cation added in beverage (mM) | 0 | 7.8 | 7.5 | 7.7 | 7.8 | 0 | 7.8 | 7.5 | 7.8 | 7.7 | 7.8 |
|---|---|---|---|---|---|---|---|---|---|---|---|
| Ratio (%) | Comparative Example 1 | Example 1 | Example 5 | Comparative Example 11 | Comparative Example 12 | Comparative Example 2 | Example 2 | Example7 | Example 8 | Comparative Example 13 | Comparative Example 14 |
| Soy protein | 1.07 | 1.07 | 1.07 | 1.07 | 1.07 | 1.07 | 1.07 | 1.07 | 1.07 | 1.07 | 1.07 |
| Granulated sugar | 7 | 7 | 7 | 7 | 7 | 7 | 7 | 7 | 7 | 7 | 7 |
| Water-soluble soy polysaccharide | 0.1 | 0.1 | 0.1 | 0.1 | 0.1 | · | · | · | · | · | · |
| Water-soluble pea polysaccharide | · | · | · | · | · | 0.2 | 0.2 | 0.2 | 0.2 | 0.2 | 0.2 |
| Calcium lactate | · | 0.24 | · | · | · | · | 0.24 | · | · | · | · |
| Calcium chloride | · | · | 0.08 | · | · | · | · | 0.08 | · | · | · |
| Magnesium chloride | · | · | · | · | · | · | · | · | 0.07 | · | · |
| Sodium chloride | · | · | · | 0.05 | · | · | · | · | · | 0.05 | · |
| Potassium chloride | · | · | · | | 0.06 | · | · | · | · | · | 0.06 |
| Water | Remainder | Remainder | Remainder | Remainder | Remainder | Remainder | Remainder | Remainder | Remainder | Remainder | Remainder |
| Total | 100 | 100 | 100 | 100 | 100 | 100 | 100 | 100 | 100 | 100 | 100 |
| Beverage pH | 4.0 | 4.0 | 4.0 | 4.0 | 4.0 | 4.0 | 4.0 | 4.0 | 4.0 | 4.0 | 4.0 |

(Table 4) Evaluation result of beverage stability

| | | | | | | | | | | | |
|---|---|---|---|---|---|---|---|---|---|---|---|
| Concentration of cation added in beverage (mM) | 0 | 7.8 | 7.5 | 7.7 | 7.8 | 0 | 7.8 | 7.5 | 7.8 | 7.7 | 7.8 |
| | Comparative Example 1 | Example 1 | Example 5 | Comparative Example 11 | Comparative Example 12 | Comparative Example 2 | Example 2 | Example 7 | Example 8 | Comparative Example 13 | Comparative Example 14 |
| Water-soluble polysaccharide | Water-soluble soy polysaccharide | | | | | Water-soluble pea polysaccharide | | | | | |
| Cation salt | None | Calcium lactate | Calcium chloride | Sodium chloride | Potassium chloride | None | Calcium lactate | Calcium chloride | Magnesium chloride | Sodium chloride | Potassium chloride |
| Aggregation | Separation and aggregation | - | . | Separation and aggregation | Separation and aggregation | Separation and aggregation | . | . | . | Separation and aggregation | Separation and aggregation |
| Viscosity (mPa.s) | | 5.2 | 5.5 | | | | 5.3 | 5.4 | 5.5 | | |
| Sedimentation rate (%) | | 1.9 | 1.8 | | | | 0.9 | 1.0 | 1.2 | | |
| Flavor | | A | A | | | | A | A | A | | |
| Overall evaluation | B | A | A | B | B | B | A | A | A | B | B |

Even when sodium salt or potassium salt was added as a salt to generate a monovalent cation, the stability was not improved. On the other hand, when calcium salt or magnesium salt was added as a salt to generate a divalent cation, improvement of the stability was recognized.

(Amount of salt added)

With salts at formulation amounts illustrated in Table 5, acidic soy protein beverages were prepared. The evaluation result is illustrated in Table 6.

(Table 5) Beverage formulation

| | | | | | | | | | | |
|---|---|---|---|---|---|---|---|---|---|---|
| Concentration of cation added in beverage (mM) | 0 | 2.5 | 7.5 | 15 | 75 | 0 | 2.5 | 5 | 7.5 | 15 | 20 |
| Ratio (%) | Comparative Example 1 | Comparative Example 15 | Example 5 | Example 8 | Comparative Example 16 | Comparative Example 2 | Comparative Example 17 | Example 9 | Example 7 | Example 10 | Example 11 |
| Soy protein | 1.07 | 1.07 | 1.07 | 1.07 | 1.07 | 1.07 | 1.07 | 1.07 | 1.07 | 1.07 | 1.07 |
| Granulated sugar | 7 | 7 | 7 | 7 | 7 | 7 | 7 | 7 | 7 | 7 | 7 |
| Water-soluble soy polysaccharide | 0.1 | 0.1 | 0.1 | 0.1 | 0.1 | . | . | . | . | . | . |
| Water-soluble pea polysaccharide | . | . | . | . | . | 0.2 | 0.2 | 0.2 | 0.2 | 0.2 | 0.2 |
| Calcium chloride | 0 | 0.028 | 0.083 | 0.166 | 0.832 | 0 | 0.028 | 0.055 | 0.083 | 0.166 | 0.221 |
| Magnesium chloride | . | . | . | . | . | . | . | . | . | . | . |
| Water | Remainder | Remainder | Remainder | Remainder | Remainder | Remainder | Remainder | Remainder | Remainder | Remainder | Remainder |
| Total | 100 | 100 | 100 | 100 | 100 | 100 | 100 | 100 | 100 | 100 | 100 |
| Beverage pH | 4.0 | 4.0 | 4.0 | 4.0 | 4.0 | 4.0 | 4.0 | 4.0 | 4.0 | 4.0 | 4.0 |
| Concentration of cation added in beverage (mM) | 25 | 75 | 0 | 7.8 | 12.3 | 41.1 | 0 | 2.5 | 7.5 | 15 | 50 |
| **Ratio** (%) | Comparative Example 18 | Comparative Example 19 | Comparative Example 20 | Example 12 | Example 13 | Comparative Example 21 | Comparative Example 22 | Comparative Example 23 | Example 14 | Example 15 | Comparative Example 24 |
| Soy protein | 1.07 | 1.07 | 1.07 | 1.07 | 1.07 | 1.07 | 2.14 | 2.14 | 2.14 | 2.14 | 2.14 |
| Granulated sugar | 7 | 7 | 7 | 7 | 7 | 7 | 7 | 7 | 7 | 7 | 7 |

(continued)

| Ratio (%) | Comparative Example 1 | Comparative Example 15 | Example 5 | Example 8 | Comparative Example 16 | Comparative Example 2 | Comparative Example 17 | Example 9 | Example 7 | Example 10 | Example 11 |
|---|---|---|---|---|---|---|---|---|---|---|---|
| Water-soluble soy polysaccharide | . | . | . | . | . | . | . | . | . | . | . |
| Water-soluble pea polysaccharide | 0.2 | 0.2 | 0.2 | 0.2 | 0.2 | 0.2 | 0.4 | 0.4 | 0.4 | 0.4 | 0.4 |
| Calcium chloride | 0.277 | 0.832 | . | . | . | . | 0 | 0.028 | 0.083 | 0.166 | 0.554 |
| Magnesium chloride | . | . | 0 | 0.074 | 0.118 | 0.392 | . | . | . | . | . |
| Water | Remainder | Remainder | Remainder | Remainder | Remainder | Remainder | Remainder | Remainder | Remainder | Remainder | Remainder |
| Total | 100 | 100 | 100 | 100 | 100 | 100 | 100 | 100 | 100 | 100 | 100 |
| Beverage pH | 4.0 | 4.0 | 4.0 | 4.0 | 4.0 | 4.0 | 4.0 | 4.0 | 4.0 | 4.0 | 4.0 |

(Table 6) Evaluation result of beverage stability

| Concentration of cation added in beverage (mM) | 0 | 2.5 | 7.5 | 15 | 15 | 0 | 2.5 | 5 | 7.5 | 15 | 20 |
|---|---|---|---|---|---|---|---|---|---|---|---|
| | Comparative Example 1 | Comparative Example 15 | Example 5 | Example 8 | Comparative Example 16 | Comparative Example 2 | Comparative Example 17 | Example 9 | Example 7 | Example 10 | Example 11 |
| Water-soluble polysaccharide | Water-soluble soy polysaccharide | | | | | | Water-soluble pea polysaccharide | | | | |
| Cation salt | Calcium chloride | | | | | | | | | | |
| Aggregation | Separation and aggregation | Separation and aggregation | · | · | Separation and aggregation | Separation and aggregation | · | · | · | · | · |
| Viscosity (mPa·s) | | | 5.5 | 5.6 | | | 5.6 | 5.4 | 5.4 | 5.6 | 5.5 |
| Sedimentation rate (%) | | | 1.8 | 1.8 | | | 4.0 | 1.4 | 1.0 | 1.3 | 2.0 |
| Flavor | | | A | A | | | A | A | A | A | A |
| Overall evaluation | B | B | A | A | B | B | B | A | A | A | A |
| Concentration of cation added in beverage (mM) | 25 | 15 | 0 | 7.8 | 12.3 | 41.1 | 0 | 2.5 | 7.5 | 15 | 50 |
| | Comparative Example 18 | Comparative Example 19 | Comparative Example 20 | Example 12 | Example 13 | Comparative Example 21 | Comparative Example 22 | Comparative Example 23 | Example 14 | Example 15 | Comparative Example 24 |
| Water-soluble polysaccharide | Water-soluble pea polysaccharide | | | | | | | | | | |
| Cation salt | Calcium chloride | | Magnesium chloride | | | | Calcium chloride | | | | |

(continued)

| Water-soluble polysaccharide | Water-soluble pea polysaccharide | | | | | | | | | | |
|---|---|---|---|---|---|---|---|---|---|---|---|
| Aggregation | Separation and aggregation | Separation and aggregation | Separation and aggregation | · | · | Separation and aggregation | · | · | · | · | Separation and aggregation |
| Viscosity (mPa·s) | | | | 5.5 | 5.5 | | 5.9 | 5.8 | 5.9 | 5.1 | |
| Sedimentation rate (%) | | | | 1.2 | 1.6 | | 7.3 | 5.6 | 2.4 | 2.2 | |
| Flavor | | | | A | A | | A | A | A | A | |
| Overall evaluation | B | B | B | A | A | B | B | B | A | A | B |

When the amount of the divalent cation added was 5 mM to 20 mM based on weight in the beverage, improvement of the stability was recognized.

(Type of vegetable protein)

With various vegetable proteins illustrated in Table 7, acidic vegetable protein beverages were prepared. The evaluation result is illustrated in Table 8.

(Table 7) Beverage formulation

| Concentration of cation added in beverage (mM) | 0 | 7.8 | 0 | 7.8 | 0 | 7.8 | 0 | 7.8 | 0 | 7.5 |
|---|---|---|---|---|---|---|---|---|---|---|
| **Ratio** (%) | Comparative Example 25 | Example 16 | Comparative Example 26 | Example 17 | Comparative Example 27 | Example 18 | Comparative Example 28 | Example 19 | Comparative Example 29 | Example 20 |
| Coconut milk | 10 | 10 | 10 | 10 | . | . | . | . | . | . |
| Almond milk powder | . | . | . | . | 1.76 | 1.76 | . | . | . | . |
| Concentrated oat milk | . | . | . | . | . | . | 7.7 | 7.7 | . | . |
| Pea protein isolate | . | . | . | . | . | . | . | . | 1.2 | 1.2 |
| Granulated sugar | 7 | 7 | 7 | 7 | 7 | 7 | 7 | 7 | 7 | 7 |
| Water-soluble soy polysaccharide | . | . | . | . | . | . | 0.2 | 0.2 | . | . |
| Water-soluble pea polysaccharide | 0.2 | 0.2 | 0.2 | 0.2 | 0.4 | 0.4 | . | . | 0.2 | 0.2 |
| Calcium lactate | 0 | 0.24 | 0 | 0.24 | 0 | 0.24 | 0 | 0.24 | . | . |
| Calcium chloride | . | . | . | . | . | . | . | . | 0 | 0.08 |
| Water | Remainder | Remainder | Remainder | Remainder | Remainder | Remainder | Remainder | Remainder | Remainder | Remainder |
| Total | 100 | 100 | 100 | 100 | 100 | 100 | 100 | 100 | 100 | 100 |
| Beverage pH | 4.0 | 4.0 | 3.6 | 3.6 | 3.8 | 3.8 | 4.0 | 4.0 | 4.0 | 4.0 |

(Table 8) Evaluation result of beverage stability

| | | | | | | | | | | |
|---|---|---|---|---|---|---|---|---|---|---|
| Concentration of cation added in beverage (mM) | 0 | 7.8 | 0 | 7.8 | 0 | 7.8 | 0 | 7.8 | 0 | 7.5 |
| | Comparative Example 25 | Example 16 | Comparative Example 26 | Example 17 | Comparative Example 21 | Example 18 | Comparative Example 28 | Example 19 | Comparative Example 29 | Example 20 |
| Water-soluble polysaccharide | Water-soluble pea polysaccharide | | | | | | Water-soluble soy polysaccharide | | Water-soluble pea polysaccharide | |
| Cation salt | Calcium lactate | | | | | | | | Calcium chloride | |
| Aggregation | Separation and aggregation | · | Separation and aggregation | · | · | · | · | · | Separation and aggregation | |
| Mscosity (mPa·s) | | 4.1 | | 4.1 | 5.9 | 6 | 6 | 5.9 | | 4.1 |
| Sedimentation rate (%) | | 0.1 | | 0.1 | 3.8 | 2.5 | 3.9 | 2.9 | | 3.0 |
| Overall evaluation | B | A | B | A | B | A | B | A | B | A |

For all of coconut, almond, oat, and pea, among vegetables from which vegetable protein is derived, addition of a divalent cation and a legumes polysaccharide was effective in improving stability. It is known that the structure of reserve protein of vegetables is preserved beyond vegetable species. Therefore, it is inferred that the stability improvement effect in a divalent cation is also exerted to a wide range of vegetable proteins.

(Fermented type acidic vegetable protein beverage)

A water-soluble pea polysaccharide in an amount of 12.5 g, dispersed in 157.5 g of water, was heated and dissolved at 80°C. After cooled to room temperature, the solution was added with 830 g of plain soy milk (manufactured by Fuji Oil Co., Ltd.). Thereafter, the soy milk containing the water-soluble pea polysaccharide was sterilized by heating to 93°C. After cooled to 42°C, the product was added with 30 g of a commercially available yogurt as a starter. The obtained mixture was fermented at 40°C until the pH reached $4.5 \pm 0.1$. The curd cooled to 10°C after the fermentation was homogenized by a homogenizer. In this manner, a fermented liquid was prepared. According to formulations in Table 9, fermented type acidic vegetable protein beverages were prepared. The evaluation result is illustrated in Table 9.

(Table 9) Formulation and evaluation result of fermented type vegetable acidic protein beverage

| Ratio (%) | Comparative Example 30 | Example 21 |
| --- | --- | --- |
| Fermented liquid | 25 | 25 |
| Granulated sugar | 7 | 7 |
| Calcium chloride | 0 | 0.083 |
| Water | Remainder | Remainder |
| Total | 100 | 100 |
| Beverage pH | 4.0 | 4.0 |
| Concentration of cation added in beverage (mM) | 0 | 7.5 |
| Amount of water-soluble pea polysaccharide in beverage (%) | 0.3 | 0.3 |
| Aggregation | - | - |
| Viscosity (mPa·s) | 4.5 | 4.9 |
| Sedimentation rate (%) | 3.3 | 1.9 |
| Flavor | A | A |
| Overall evaluation | B | A |

The trend toward stability improvement by the addition of calcium was recognized.

According to the present embodiment, the aggregation of the acidic vegetable protein beverage can be suppressed. In the acidic vegetable protein beverage, separation and aggregation do not occur even in acidity. Therefore, there can be provided an acidic vegetable protein beverage that retains a good appearance and has good texture and flavor.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. An acidic vegetable protein beverage, comprising a legumes-derived water-soluble polysaccharide, a divalent cation, and a vegetable protein.

2. The acidic vegetable protein beverage according to claim 1,

wherein a concentration of the divalent cation added in the acidic vegetable protein beverage is 3 to 20 mM based on weight.

3. The acidic vegetable protein beverage according to claim 1 or 2,
   wherein the legumes-derived water-soluble polysaccharide is a water-soluble pea polysaccharide or a water-soluble soy polysaccharide.

4. A protein dispersion stabilizer for an acidic vegetable protein beverage, comprising a legumes-derived water-soluble polysaccharide and a divalent cation.

5. A production method of an acidic vegetable protein beverage, comprising adding a legumes-derived water-soluble polysaccharide and a divalent cation.

6. The production method of an acidic vegetable protein beverage according to claim 5, comprising adding the divalent cation such that a concentration of the divalent cation added in the acidic vegetable protein beverage is 3 to 20 mM based on weight.

7. A method for stabilizing protein dispersion in an acidic vegetable protein beverage, comprising adding a legumes-derived water-soluble polysaccharide and a divalent cation.

8. The method for stabilizing protein dispersion in an acidic vegetable protein beverage according to claim 7, comprising adding the divalent cation such that a concentration of the divalent cation added in the acidic vegetable protein beverage is 3 to 20 mM based on weight.

Europäisches
Patentamt

European
Patent Office

Office européen
des brevets

# EUROPEAN SEARCH REPORT

Application Number

EP 23 15 1314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 525 668 B1 (UNILEVER NV [NL]; UNILEVER PLC [GB]) 27 November 2013 (2013-11-27) | 1,3-5,7 | INV. A23J3/14 A23J3/16 |
| Y | * Experiment 1; paragraph [0011] * | 2,6,8 | A23L2/38 A23L2/66 A23L11/60 |
| X | US 2007/148321 A1 (ASHIDA SHIGERU [JP] ET AL) 28 June 2007 (2007-06-28) * example 2 * | 1,3-5,7 | A23L11/65 A23L29/00 A23L29/206 A23L29/262 |
| X | EP 2 525 669 B1 (UNILEVER NV [NL]; UNILEVER PLC [GB]) 23 July 2014 (2014-07-23) * Examples; paragraphs [0073], [0075], [0083] - [0103]; tables 5,6 * | 1,3-5,7 | A23L33/185 |
| Y | US 2006/210668 A1 (THORSOE HANNE [DK] ET AL) 21 September 2006 (2006-09-21) * paragraph [0025] * | 2,6,8 | |

TECHNICAL FIELDS
SEARCHED        (IPC)

A23J
A23L

The present search report has been drawn up for all claims

| Place of search | Date of completion of the search | Examiner |
|---|---|---|
| Munich | 3 May 2023 | Steiner Ribeiro G. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 15 1314

03-05-2023

| Patent document cited in search report | | Publication date | Patent family member(s) | | Publication date |
|---|---|---|---|---|---|
| EP 2525668 | B1 | 27-11-2013 | AR | 079951 A1 | 29-02-2012 |
| | | | BR | 112012010950 A2 | 21-07-2020 |
| | | | CN | 102711511 A | 03-10-2012 |
| | | | EP | 2525668 A1 | 28-11-2012 |
| | | | WO | 2011088941 A1 | 28-07-2011 |
| | | | ZA | 201202849 B | 26-06-2013 |
| US 2007148321 | A1 | 28-06-2007 | JP | 4636015 B2 | 23-02-2011 |
| | | | JP | WO2005084461 A1 | 29-11-2007 |
| | | | TW | I360395 B | 21-03-2012 |
| | | | US | 2007148321 A1 | 28-06-2007 |
| | | | WO | 2005084461 A1 | 15-09-2005 |
| EP 2525669 | B1 | 23-07-2014 | AR | 079952 A1 | 29-02-2012 |
| | | | BR | 112012010862 A2 | 15-09-2015 |
| | | | CN | 102711510 A | 03-10-2012 |
| | | | EP | 2525669 A1 | 28-11-2012 |
| | | | WO | 2011088942 A1 | 28-07-2011 |
| | | | ZA | 201202846 B | 26-06-2013 |
| US 2006210668 | A1 | 21-09-2006 | AU | 2004264730 A1 | 24-02-2005 |
| | | | CA | 2534593 A1 | 24-02-2005 |
| | | | CN | 1867266 A | 22-11-2006 |
| | | | CN | 103535837 A | 29-01-2014 |
| | | | EP | 1656036 A1 | 17-05-2006 |
| | | | JP | 4568281 B2 | 27-10-2010 |
| | | | JP | 2007502611 A | 15-02-2007 |
| | | | JP | 2010187703 A | 02-09-2010 |
| | | | US | 2006210668 A1 | 21-09-2006 |
| | | | WO | 2005016027 A1 | 24-02-2005 |

EPO FORM P0459

For more details about this annex : see Official Journal of the European Patent Office, No. 12/82

**EP 4 212 022 A1**

**REFERENCES CITED IN THE DESCRIPTION**

**Patent documents cited in the description**

- JP 5308900 A
- WO 2004002231 A
- JP 2012065907 W